# EUROPÄISCHE PATENTSCHRIFT

(11) **EP 2 983 973 B1**
(45) Veröffentlichungstag und Bekanntmachung des Hinweises auf die Patenterteilung: **30.05.2018**
(21) Anmeldenummer: 14716270.5
(22) Anmeldetag: 03.04.2014
(51) Int. Cl.: B62K 3/00, B62K 13/00

(54) **SITZVORRICHTUNG FÜR EINEN TRETROLLER**
SEAT DEVICE FOR A KICK SCOOTER
DISPOSITIF DE SIÈGE POUR TROTTINETTE

(30) Priorität: 08.04.2013 DE 102013103482; 25.06.2013 DE 102013106634
(43) Veröffentlichungstag der Anmeldung: 17.02.2016
(73) Patentinhaber: Micro Mobility Systems AG, 8700 Küsnacht (CH)
(72) Erfinder: OUBOTER, Janine, CH-8707 Uetikon am See (CH); OUBOTER, Willem Jan, CH-8707 Uetikon am See (CH)
(74) Vertreter: Daub, Thomas
(86) Internationale Anmeldenummer: PCT/EP2014/056713
(87) Internationale Veröffentlichungsnummer: WO 2014/166812

(56) Entgegenhaltungen:
- WO-A1-2005/073065
- CN-U- 201 880 338
- DE-A1-102008 038 339
- DE-U1- 20 209 498
- DE-U1- 20 306 854
- DE-U1- 20 316 610
- DE-U1- 20 319 192
- US-A- 1 253 768
- US-A- 4 958 842
- US-A1- 2001 040 352
- US-A1- 2002 121 757
- US-A1- 2010 013 183

## Beschreibung

### Stand der Technik

Die Erfindung betrifft eine Rollersitzvorrichtung nach dem Oberbegriff des Anspruchs 1. Aus der US 2002/121757 A1, der DE 203 16 610 U1 und der DE 10 2008 038339 A1 ist jeweils bereits eine Rollersitzvorrichtung, insbesondere Tretrollersitzvorrichtung, mit einem Sitzgrundkörper und mit zumindest einer ersten Befestigungseinheit zur lösbaren Befestigung an einem Roller bekannt. US 2002/121757 A1 offenbart eine Rollersitzvorrichtung, auf der der Oberbegriff von Anspruch 1 basiert. Die Aufgabe der Erfindung besteht insbesondere darin, eine gattungsgemäße Vorrichtung mit verbesserten Eigenschaften hinsichtlich einer Montagefreundlichkeit, hinsichtlich einer Konstruktion, hinsichtlich eines Bedienerkomforts und/oder insbesondere hinsichtlich einer Kinderfreundlichkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Rollersitzvorrichtung, insbesondere von einer Tretrollersitzvorrichtung, mit einem Sitzgrundkörper und mit zumindest einer ersten Befestigungseinheit zur Befestigung an einem Roller.

Es wird erfindungsgemäß vorgeschlagen, dass die zumindest eine erste Befestigungseinheit zumindest eine Auflagefläche aufweist, die in einem montierten Zustand dazu vorgesehen ist, den Sitzgrundkörper zumindest gegen ein Trittbrett des Rollers abzustützen. Vorzugsweise wird über die Auflagefläche in einem montierten Zustand und/oder in einem Betrieb insbesondere eine Hauptgewichtskraft der Rollersitzvorrichtung und/oder eines Bedieners gegen das Trittbrett des Rollers abgestützt. Bevorzugt ist die Rollersitzvorrichtung von einer Kindertretrollersitzvorrichtung gebildet. Besonders bevorzugt ist die zumindest eine erste Befestigungseinheit insbesondere zu einer lösbaren Befestigung an einem Roller vorgesehen. Grundsätzlich kann die Rollersitzvorrichtung über die zumindest eine erste Befestigungseinheit auch fest mit dem Roller verbunden sein. Beispielsweise kann die Rollersitzvorrichtung in dem Trittbrett des Rollers integriert sein. Insbesondere wäre dabei denkbar, dass eine Trittfläche des Trittbretts entfernt oder weggeklappt werden kann und die Rollersitzvorrichtung anschließend für einen Betrieb entfaltet, aufgepumpt und/oder aufgebaut wird. Nach einem Betrieb kann die Rollersitzvorrichtung anschließend wieder in dem Trittbrett verstaut werden. Unter einer "Rollersitzvorrichtung" soll in diesem Zusammenhang insbesondere eine Vorrichtung verstanden werden, die zumindest eine Sitzfläche aufweist und die dazu vorgesehen ist, auf einem Roller genutzt zu werden. Vorzugsweise soll darunter insbesondere eine Vorrichtung verstanden werden, die einen Sitz für einen Roller bildet. Ferner soll in diesem Zusammenhang unter einer "Tretrollersitzvorrichtung" insbesondere eine Rollersitzvorrichtung verstanden werden, die zur Anwendung an einem Tretroller vorgesehen ist. Dabei soll unter einem "Tretroller" insbesondere ein unmotorisiertes Fortbewegungsmittel mit zumindest zwei Rollen bzw. Rädern verstanden werden. Vorzugsweise soll darunter insbesondere ein Roller verstanden werden, der zumindest teilweise durch die Muskelkraft eines Bedieners durch Abstoßen mit zumindest einem Bein angetrieben wird. Des Weiteren soll in diesem Zusammenhang unter einem "Sitzgrundkörper" insbesondere ein Teil einer Sitzvorrichtung verstanden werden, der eine Sitzfläche umfasst bzw. eine Sitzfläche bildet. Vorzugsweise soll darunter ein Körper verstanden werden, der zumindest einen Großteil eines Volumens der Sitzvorrichtung bildet. Dabei soll unter "zumindest einem Großteil" insbesondere zumindest 50 %, vorzugsweise zumindest 60 % und besonders bevorzugt zumindest 70 % eines Gesamten verstanden werden. Unter einer "Befestigungseinheit" soll in diesem Zusammenhang insbesondere eine Einheit verstanden werden, die dazu vorgesehen ist, die Rollersitzvorrichtung an zumindest einer weiteren Vorrichtung und/oder einem weiteren Gerät zu befestigen. Vorzugsweise soll darunter insbesondere eine Einheit verstanden werden, die dazu vorgesehen ist, die Rollersitzvorrichtung form- und/oder kraftschlüssig mit zumindest einer weiteren Vorrichtung und/oder einem weiteren Gerät zu verbinden. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Ferner soll in diesem Zusammenhang unter "lösbar" insbesondere "zerstörungsfrei trennbar" verstanden werden. Des Weiteren soll unter einer "Auflagefläche" in diesem Zusammenhang insbesondere eine Fläche einer Vorrichtung verstanden werden, die zu einer Anlage auf bzw. an einer weiteren Fläche eines weiteren Gegenstands vorgesehen ist. Vorzugsweise soll darunter insbesondere eine Fläche verstanden werden, mit welcher eine Vorrichtung in zumindest einem Zustand auf einer weiteren Fläche aufliegt oder auf welcher ein weiterer Gegenstand in zumindest einem Zustand aufliegt. Bevorzugt soll darunter insbesondere eine Stützfläche verstanden werden. Besonders bevorzugt soll darunter insbesondere eine Fläche verstanden werden, über die eine Hauptgewichtskraft abgestützt wird. Unter einer "Hauptgewichtskraft" soll in diesem Zusammenhang insbesondere zumindest 30 %, vorzugsweise zumindest 50 % und besonders bevorzugt zumindest 70 % einer Gesamtgewichtskraft verstanden werden. Unter einem "montierten Zustand" soll in diesem Zusammenhang insbesondere ein Zustand verstanden werden, in welchem die Rollersitzvorrichtung vollständig und in vorgesehener Weise mit dem Roller verbunden ist. Vorzugsweise soll darunter insbesondere ein Zustand für einen Betrieb verstanden werden. Ferner soll in diesem Zusammenhang unter "vorgesehen" insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Des Weiteren soll in diesem Zusammenhang unter einem "Trittbrett" insbesondere ein Teil des Rollers verstanden werden, der in zumindest einem Betriebszustand dazu vorgesehen ist, eine Abstellfläche für zumindest einen Fuß eines Bedieners bereitzustellen. Vorzugsweise soll darunter insbesondere ein Teil des Rollers verstanden werden, der zumindest eine Haupterstreckungsfläche aufweist, die sich, bei einem regulären Stand des Rollers, zumindest annähernd parallel zu einer Untergrundebene erstreckt. Dabei soll unter einer "Haupterstreckungsebene" eines Teils insbesondere eine Ebene verstanden werden, welche parallel zu einer größten Seitenfläche eines kleinsten geometrischen Quaders ist, welcher das Teil gerade noch vollständig umschließt, und insbesondere durch den Mittelpunkt des Quaders verläuft.

Durch die erfindungsgemäße Ausgestaltung der Rollersitzvorrichtung kann eine besonders vorteilhafte Sitzvorrichtung bereitgestellt werden. Insbesondere kann durch die Auflagefläche eine besonders einfache Montage auf einem Roller erreicht werden. Ferner wird dadurch insbesondere lediglich eine geringe Steife der Sitzvorrichtung benötigt, da der Sitzgrundkörper direkt auf dem Trittbrett abgestützt ist. Insbesondere bei einer Ausbildung als Kindertretrollersitzvorrichtung kann dadurch eine vorteilhaft einfache und zuverlässige Sitzvorrichtung für Kinder bereitgestellt werden. Zudem kann dadurch insbesondere ein Gewicht gering gehalten werden.

Ferner wird vorgeschlagen, dass die zumindest eine erste Befestigungseinheit zumindest ein Aufnahmeelement aufweist, das in einem montierten Zustand dazu vorgesehen ist, das Trittbrett des Rollers zumindest teilweise zu umgreifen. Unter einem "Aufnahmeelement" soll in diesem Zusammenhang insbesondere ein Element verstanden werden, das zumindest einen Aufnahmebereich zur zumindest teilweisen Aufnahme eines Gegenstands aufweist. Vorzugsweise soll darunter ein Element verstanden werden, das dazu vorgesehen ist, einen Gegenstand zumindest teilweise zu umgreifen. Ferner soll in diesem Zusammenhang unter "zumindest teilweise umgreifen" insbesondere verstanden werden, dass ein umgriffener Gegenstand in zumindest einer Ebene in einem Winkelbereich von zumindest 90°, vorzugsweise von zumindest 120° und besonders bevorzugt von zumindest 180° von dem Aufnahmeelemert umschlossen wird. Dadurch kann ein vorteilhafter Halt der Rollersitzvorrichtung auf dem Roller gewährleistet werden. Ferner kann dadurch insbesondere eine konstruktiv einfache und leicht herzustellende Befestigung der Rollersitzvorrichtung auf dem Roller bereitgestellt werden. Des Weiteren kann dadurch eine besonders kostengünstige Rollersitzvorrichtung bereitgestellt werden.

Des Weiteren wird erfindungsgemäß vorgeschlagen, dass die Rollersitzvorrichtung zumindest eine zweite Befestigungseinheit aufweist, die mit einer Lenkstange des Rollers lösbar verbindbar ist. Unter einer "Lenkstange" soll in diesem Zusammenhang insbesondere ein stangenförmiges Bauteil verstanden werden, das zumindest ein Griffelement für einen Bediener umfasst. Vorzugsweise ist die Lenkstange zu einer Kraftübertragung von einem Griffelement auf zumindest ein Rad und/oder zumindest eine Achse des Rollers vorgesehen. Besonders bevorzugt ist die Lenkstange zumindest teilweise zu einer Übertragung einer Steuerungsbewegung eines Bedieners auf zumindest ein Rad und/oder zumindest eine Achse des Rollers vorgesehen. Die Lenkstange kann dabei sowohl starr, als auch relativ beweglich gegenüber dem Trittbrett des Rollers angeordnet sein. Dadurch kann ein besonders vorteilhafter Halt der Rollersitzvorrichtung auf dem Roller gewährleistet werden. Insbesondere kann so eine Befestigung an zwei Stellen des Rollers realisiert werden, wodurch ein unbeabsichtigtes Lösen verhindert werden kann.

Es wird ferner vorgeschlagen, dass die zumindest eine zweite Befestigungseinheit zumindest ein Aufnahmeelement aufweist, das in einem montierten Zustand dazu vorgesehen ist, die Lenkstange des Rollers zumindest teilweise zu umgreifen. Dadurch kann vorteilhaft eine konstruktiv einfache und leicht herzustellende Befestigung der Rollersitzvorrichtung an der Lenkstange des Rollers bereitgestellt werden. Insbesondere kann dadurch bereits ein Formschluss in mehrere Richtungen bereitgestellt werden, ohne dass besondere Montagevorgänge durchgeführt werden müssen.

Des Weiteren wird vorgeschlagen, dass die zumindest eine zweite Befestigungseinheit zumindest ein Aufnahmeelement aufweist, das in einem montierten Zustand dazu vorgesehen ist, die Lenkstange des Rollers vollständig zu umgreifen. Unter "vollständig umgreifen" soll in diesem Zusammenhang insbesondere verstanden werden, dass ein umgriffener Gegenstand, insbesondere die Lenkstange des Rollers, in zumindest einer Ebene vollständig von dem Aufnahmeelement umschlossen wird. Dadurch kann vorteilhaft eine konstruktiv einfache und besonders zuverlässige Befestigung der Rollersitzvorrichtung an der Lenkstange des Rollers bereitgestellt werden. Insbesondere kann dadurch ein besonders vorteilhafter Formschluss erreicht werden, bei dem insbesondere ein leichtes Lösen der Rollersitzvorrichtung von dem Roller vermieden werden kann.

Ferner wird vorgeschlagen, dass das Aufnahmeelement der zumindest einen zweiten Befestigungseinheit eine Durchgangsöffnung aufweist, die in zumindest einer Ebene eine geschlossene, unterbrechungsfreie Außenkontur aufweist. Unter einer "Durchgangsöffnung" soll in diesem Zusammenhang insbesondere eine Öffnung verstanden werden, die zumindest einen Eingang und einen von dem Eingang getrennten Ausgang aufweist. Vorzugsweise ist der Ausgang an einem dem Eingang abgewandten Ende der Durchgangsöffnung angeordnet. Unter einer "geschlossenen, unterbrechungsfreien Außenkontur" soll in diesem Zusammenhang insbesondere verstanden werden, dass ein die Durchgangsöffnung begrenzendes Element in zumindest einer Ebene, welche insbesondere die Durchgangsöffnung vollständig schneidet, eine der Durchgangsöffnung zugewandte Außenkontur aufweist, welche die Durchgangsöffnung stoffschlüssig unterbrechungsfrei umgibt. Dadurch kann vorteilhaft eine besonders zuverlässige und stabile Befestigung der Rollersitzvorrichtung an der Lenkstange des Rollers bereitgestellt werden. Insbesondere kann dadurch ein besonders vorteilhafter Formschluss erreicht werden, bei dem insbesondere ein leichtes Lösen der Rollersitzvorrichtung von dem Roller vermieden werden kann.

Es wird weiter vorgeschlagen, dass die zumindest eine erste Befestigungseinheit zumindest ein Befestigungsmittel aufweist, das in einem montierten Zustand dazu vorgesehen ist, das Trittbrett des Rollers in einem Aufnahmebereich des zumindest einen Aufnahmeelements lösbar zu fixieren. Unter einem "Befestigungsmittel" soll in diesem Zusammenhang insbesondere ein Mittel der Befestigungseinheit verstanden werden, das dazu vorgesehen ist, eine Befestigung der Rollersitzvorrichtung an zumindest einer weiteren Vorrichtung und/oder einem weiteren Gerät über die Befestigungseinheit zu fixieren. Vorzugsweise soll darunter insbesondere ein Mittel verstanden werden, das zu einer direkten form- und/oder kraftschlüssigen Fixierung der Rollersitzvorrichtung an zumindest einer weiteren Vorrichtung und/oder einem weiteren Gerät vorgesehen ist. Es sind verschiedene, dem Fachmann als sinnvoll erscheinende Befestigungsmittel denkbar, wie insbesondere Klettverschlusse, Gummibänder, Magnete, Klebebänder, Dornschnallen und/oder Reißverschlüsse. Dadurch kann zu dem Aufnahmeelement ein Befestigungsmittel bereitgestellt werden, welches die Rollersitzvorrichtung sicher fixiert. Ferner kann dadurch besonders vorteilhafte eine Befestigungseinheit bereitgestellt werden, mit der eine besonders verliersichere Verbindung zwischen der Rollersitzvorrichtung und dem Roller möglich ist.

Ferner wird vorgeschlagen, dass das zumindest eine Befestigungsmittel zumindest teilweise von einem Klettverschluss und/oder einem Gummiband gebildet ist. Unter einem "Klettverschluss" soll in diesem Zusammenhang insbesondere ein haftender Verschluss verstanden werden, der aus zumindest zwei Teilen besteht. Vorzugsweise besteht der Verschluss aus zwei Bändern und/oder Flächen, wobei ein Band und/oder eine Fläche einen Belag aus einer Vielzahl von kleinen Widerhaken aufweist und das andere Band und/oder die andere Fläche eine flauschige Schicht aufweist. Bei einer hergestellten Verbindung verhaken sich die Widerhaken in der flauschigen Schicht und stellen eine kraft- und/oder formschlüssige Verbindung her. Es sind alternativ jedoch auch andere Klettverschlussvarianten möglich, wie beispielsweise eine Pilzband und Veloursband Verbindung, eine Pilzband und Flauschband Verbindung und/oder eine Pilzband und Pilzband Verbindung. Unter einem "Gummiband" soll in diesem Zusammenhang insbesondere ein elastisches Band verstanden werden. Vorzugsweise soll darunter insbesondere ein Band verstanden werden, das zumindest teilweise aus Kautschuk hergestellt ist. Der Kautschuk kann dabei sowohl natürlich als auch synthetisch sein. Dabei soll unter "elastisch" insbesondere verstanden werden, dass ein Element wiederholt verformbar ist, ohne dass dadurch das Element mechanisch beschädigt oder zerstört wird, und das insbesondere nach einer Verformung selbstständig wieder einer Grundform zustrebt. Dadurch kann besonders vorteilhaft eine Befestigungseinheit mit einem besonders vorteilhaften Befestigungsmittel bereitgestellt werden. Ferner kann dadurch insbesondere ein Befestigungsmittel bereitgestellt werden, mit dem besonders leicht eine Verbindung herstellbar ist. Dadurch kann insbesondere ein Befestigungsmittel bereitgestellt werden, mittels dem auch durch ein Kind, ohne Hilfe der Eltern, eine Verbindung herstellbar ist, wodurch wiederum eine hohe Kinderfreundlichkeit erreicht werden kann. Insbesondere kann bei einer Ausbildung des Befestigungsmittels als Gummiband besonders einfach eine Fixierung erfolgen. Des Weiteren kann dadurch insbesondere eine besonders kostengünstige Rollersitzvorrichtung mit einer besonders einfachen und kostengünstigen Befestigungseinheit bereitgestellt werden.

Es wird weiter vorgeschlagen, dass die zumindest eine zweite Befestigungseinheit zumindest ein Befestigungsmittel aufweist, das in einem montierten Zustand dazu vorgesehen ist, die Lenkstange des Rollers in einem Aufnahmebereich des zumindest einen Aufnahmeelements lösbar zu fixieren. Dadurch kann besonders vorteilhaft eine Befestigungseinheit bereitgestellt werden, mit der eine besonders verliersichere Verbindung zwischen der Rollersitzvorrichtung und dem Roller möglich ist.

Zudem wird vorgeschlagen, dass das zumindest eine Befestigungsmittel zumindest teilweise von einem Klettverschluss gebildet ist. Dadurch kann besonders vorteilhaft eine Befestigungseinheit mit einem besonders leicht herzustellenden Befestigungsmittel bereitgestellt werden. Ferner kann dadurch insbesondere ein besonders einfaches und kostengünstiges Befestigungsmittel bereitgestellt werden.

Des Weiteren wird vorgeschlagen, dass der Sitzgrundkörper zumindest teilweise einstückig mit der zumindest einen ersten Befestigungseinheit ausgebildet ist. Vorzugsweise ist der Sitzgrundkörper vollständig einstückig mit der zumindest einen ersten Befestigungseinheit ausgebildet. Vorzugsweise sind der Sitzgrundkörper und die zumindest eine Auflagefläche der zumindest einen ersten Befestigungseinheit aus einem Stück gefertigt. Unter "einstückig" soll in diesem Zusammenhang insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann eine vorteilhafte Rollersitzvorrichtung bereitgestellt werden. Ferner können dadurch insbesondere Einzelteile vermieden werden. Des Weiteren kann bei einer einstückigen Ausbildung eine vorteilhaft leichte Montage der Rollersitzvorrichtung an dem Roller erreicht werden.

Es wird ferner vorgeschlagen, dass der Sitzgrundkörper zumindest teilweise einstückig mit der zumindest einen zweiten Befestigungseinheit ausgebildet ist. Vorzugsweise ist der Sitzgrundkörper vollständig einstückig mit der zumindest einen zweiten Befestigungseinheit ausgebildet. Besonders bevorzugt sind der Sitzgrundkörper und das zumindest eine Aufnahmeelement der zumindest einen zweiten Befestigungseinheit aus einem Stück gefertigt. Besonders bevorzugt schließen der Sitzgrundkörper und das zumindest eine Aufnahmeelement der zumindest einen zweiten Befestigungseinheit einen gemeinsamen Hohlraum ein. Dadurch kann eine vorteilhafte Rollersitzvorrichtung bereitgestellt werden. Ferner können dadurch insbesondere weiter Einzelteile vermieden werden. Zudem kann bei einer einstückigen Ausbildung eine vorteilhaft leichte Montage der Rollersitzvorrichtung an dem Roller erreicht werden.

Es wird weiter vorgeschlagen, dass die zumindest eine erste Befestigungseinheit und die zumindest eine zweite Befestigungseinheit werkzeuglos mit dem Roller verbindbar und/oder werkzeuglos von dem Roller trennbar ist. Unter "werkzeuglos" soll in diesem Zusammenhang insbesondere ohne zusätzliche Hilfsmittel verstanden werden. Dadurch kann besonders einfach eine Verbindung hergestellt und gelöst werden. Insbesondere wird dadurch zur Herstellung und Lösung der Verbindung kein Werkzeug benötigt, sodass eine solche Verbindung überall gelöst und Hergestellt werden kann. Ferner kann die Rollersitzvorrichtung insbesondere frei von Werkzeug oder besonderen Schlüsseln an einem Roller montiert und/oder demontiert werden. Eine Montage kann dadurch insbesondere auch von einem Kind ohne Hilfe der Eltern erfolgen, wodurch wiederum eine hohe Kinderfreundlichkeit erreicht werden kann.

Erfindungsgemäß wird vorgeschlagen, dass der Sitzgrundkörper zumindest teilweise von einem gasgefüllten Hohlkörper gebildet ist. Unter einem "gasgefüllten Hohlkörper" soll erfindungsgemäß ein Körper verstanden werden, der eine feste und/oder eine elastische Außenhülle aufweist, die einen darin eingeschlossenen Innenraum vollständig begrenzt. Vorzugsweise ist der Innenraum zumindest zu einem Großteil mit einem Gas gefüllt und/oder mit einem Gas befüllbar. Bevorzugt soll darunter insbesondere ein Körper mit einer weichen und/oder elastischen Außenhülle verstanden werden, wobei die Außenhülle der Hohlkörpers und der Hohlkörper selbst durch das Gas im Innenraum eine endgültige Form annimmt. Dabei soll unter "zumindest zu einem Großteil" insbesondere zumindest zu 70 %, vorzugsweise zumindest zu 80 % und besonders bevorzugt zumindest zu 90 % verstanden werden. Dadurch kann eine vorteilhaft leichte Rollersitzvorrichtung bereitgestellt werden. Ferner kann dadurch beispielsweise für einen Transport ein Gas aus dem Sitzgrundkörper gelassen werden, wodurch die Rollersitzvorrichtung für einen Transport besonders kompakt ist. Für eine Benutzung muss die Rollersitzvorrichtung lediglich wieder aufgepumpt werden. Des Weiteren kann ein dynamisches Sitzgefühl erreicht werden. Insbesondere kann dadurch, insbesondere bei der Anwendung bei einem Kindertretroller, ein Gleichgewichtsgefühl und damit auch eine Entwicklung bei Kindern gefördert werden. Dadurch kann wiederum eine hohe Kinderfreundlichkeit erreicht werden. Zudem kann dadurch auf konstruktiv einfache Weise eine Dämpfung des Sitzgrundkörpers erreicht werden. Ferner kann dadurch insbesondere eine besonders kostengünstige Rollersitzvorrichtung bereitgestellt werden.

Zudem wird vorgeschlagen, dass der Sitzgrundkörper ein Ventil aufweist, über das Luft aus einem Hohlraum des Hohlkörpers abgelassen und/oder hinzugefügt werden kann. Unter einem "Ventil" soll in diesem Zusammenhang insbesondere ein Bauteil verstanden werden, das zu einer Steuerung eines Durchflusses von Fluiden, insbesondere von Gasen, vorgesehen ist. Es sind verschiedene Bauformen von Ventilen denkbar, vorzugsweise soll darunter jedoch ein Aufblasventil, insbesondere ein Aufblasrückschlagventil, und/oder ein Steckventil verstanden werden. Dadurch kann vorteilhaft ein Gas, insbesondere Luft, in dem Sitzgrundkörper je nach Bedarf hinzugefügt und/oder entfernt werden.

Des Weiteren wird erfindungsgemäß vorgeschlagen, dass die zumindest eine zweite Befestigungseinheit zumindest teilweise von einem gasgefüllten Hohlkörper gebildet ist. Vorzugsweise sind die zweite Befestigungseinheit und der Sitzgrundkörper von einem einstückigen gasgefüllten Hohlkörper gebildet. Dadurch kann eine vorteilhaft leichte Rollersitzvorrichtung bereitgestellt werden. Ferner kann dadurch beispielsweise für einen Transport ein Gas aus der zweiten Befestigungseinheit und vorzugsweise auch aus dem Sitzgrundkörper gelassen werden, wodurch die Rollersitzvorrichtung für einen Transport besonders kompakt ist. Für eine Benutzung muss die Rollersitzvorrichtung lediglich wieder aufgepumpt werden.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Rollersitzvorrichtung mit einem Sitzgrundkörper, mit einer ersten Befestigungseinheit, die ein Befestigungsmittel aufweist, und mit einer zweiten Befestigungseinheit, und einen Roller in einer schematischen Darstellung,
- Fig. 2: die erfindungsgemäße Rollersitzvorrichtung ohne das Befestigungsmittel in einer alternativen, schematischen Darstellung von der Seite,
- Fig. 3: die erfindungsgemäße Rollersitzvorrichtung in einer weiteren alternativen, schematischen Darstellung von oben,
- Fig. 4: die erfindungsgemäße Rollersitzvorrichtung mit dem Befestigungsmittel in einer weiteren alternativen, schematischen Darstellung von unten,
- Fig. 5: die erfindungsgemäße Rollersitzvorrichtung ohne das Befestigungsmittel in einer weiteren alternativen, schematischen Darstellung von hinten,
- Fig. 6: eine alternative erfindungsgemäße Rollersitzvorrichtung mit einem Sitzgrundkörper, mit einer ersten Befestigungseinheit, die ein Befestigungsmittel aufweist, und mit einer alternativen zweiten Befestigungseinheit, und einen Roller in einer schematischen Darstellung,
- Fig. 7: die alternative erfindungsgemäße Rollersitzvorrichtung in einer alternativen, schematischen Darstellung von unten,
- Fig. 8: einen Teilausschnitt einer weiteren alternativen erfindungsgemäßen Rollersitzvorrichtung mit einem Sitzgrundkörper, mit einer ersten Befestigungseinheit und mit einer alternativen zweiten Befestigungseinheit, die zwei Befestigungsmittel aufweist, und eines Rollers in einer schematischen Darstellung,
- Fig. 9: eine weitere erfindungsgemäße Rollersitzvorrichtung mit einem Sitzgrundkörper, mit einer ersten Befestigungseinheit, die ein Befestigungsmittel aufweist, und mit einer zweiten Befestigungseinheit, und einen Roller in einer schematischen Darstellung,
- Fig. 10: die weitere erfindungsgemäße Rollersitzvorrichtung und den Roller in einem Montagezustand in einer schematischen Darstellung und
- Fig. 11: die weitere alternative erfindungsgemäße Rollersitzvorrichtung in einer schematischen Darstellung von unten.

### Beschreibung der Ausführungsbeispiele

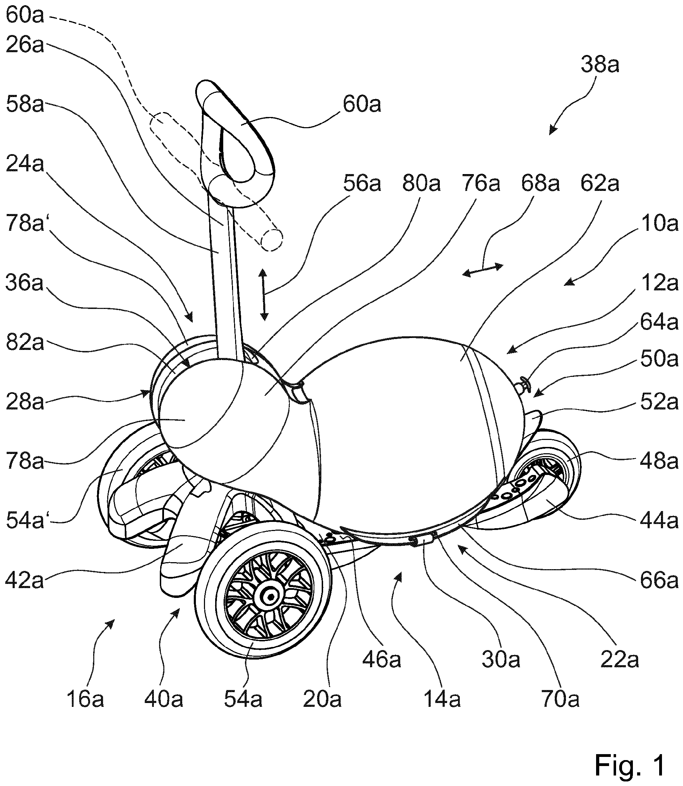

Figur 1 zeigt eine erfindungsgemäße Rollersitzvorrichtung 10a für einen Roller 16a. Der Roller 16a und die Rollersitzvorrichtung 10a bilden ein System 38a. Der Roller 16a ist von einem Tretroller gebildet. Der Roller 16a ist von einem Kindertretroller gebildet. Der Roller 16a ist von einem Kickboard gebildet. Der Roller 16a weist einen Grundkörper 40a und eine Lenkstange 26a auf. Der Grundkörper 40a weist wiederum ein Trittbrett 20a, einen vorderen Fahrwerksträger 42a, einen hinteren Fahrwerksträger 44a und einen nicht weiter sichtbaren Aufnahmebereich zur Aufnahme der Lenkstange 26a auf. Das Trittbrett 20a hat eine bikonvexe Grundform. Ferner weist das Trittbrett 20a eine Trittfläche 46a auf, die in einem vorgesehen Stand des Rollers 16a auf einer einer Standfläche abgewandten Seite des Trittbretts 20a liegt. An das Trittbrett 20a schließen an gegenüberliegenden Enden jeweils der vordere Fahrwerksträger 42a und der hintere Fahrwerksträger 44a an. Der hintere Fahrwerksträger 44a nimmt über eine nicht weiter sichtbare Achse eine hintere Rolle 48a des Rollers 16a drehbar auf. Ferner ist an dem hinteren Fahrwerksträger 44a eine Bremsvorrichtung 50a des Rollers 16a angeordnet. Über die Bremsvorrichtung 50a kann die hintere Rolle 48a abgebremst werden. Die Bremsvorrichtung 50a weist ein federbelastetes Element 52a auf, das teilweise über die hintere Rolle 48a ragt. Die Bremsvorrichtung 50a kann durch Druck, beispielsweise durch einen Fuß eines Bediener, auf das federbelastete Element 52a aktiviert werden. Der vordere Fahrwerksträger 42a weist einen nicht weiter sichtbaren Lenkmechanismus auf, an welchem zwei vordere Rollen 54a, 54a' des Rollers 16a drehbar befestigt sind. Über den nicht weiter sichtbaren Lenkmechanismus können die vorderen Rollen 54a, 54a' gegenüber dem Grundkörper 40a des Rollers 16a verkippt werden. Eine Lenkung des Rollers 16a erfolgt somit durch Gewichtsverlagerung des Bedieners. Durch die Lenkung mittels Körpereinsatz durch Gewichtsverlagerung kann insbesondere bei Kindern die Motorik und der Gleichgewichtssinn geschult werden. Grundsätzlich wäre jedoch auch ein Lenkmechanismus mit einer drehbaren Lenkstange zur direkten Lenkung denkbar. Im Bereich des vorderen Fahrwerksträgers 42a ist des Weiteren der nicht weiter sichtbare Aufnahmebereich zur Aufnahme der Lenkstange 26a angeordnet. Der Aufnahmebereich nimmt die Lenkstange 26a bezogen auf ihre Haupterstreckungsrichtung 56a parallel zu einer Normalen einer Haupterstreckungsebene des Trittbretts 20a auf. Die Lenkstange 26a besteht aus einem nicht weiter sichtbaren Kopplungsbereich, einem länglichen Stangenbereich 58a und einem Griffelement 60a. Das Griffelement 60a ist ringförmig ausgebildet. Der gesamte Roller 16a besteht zu einem Großteil aus Kunststoff. Grundsätzlich wäre jedoch auch denkbar, dass das Griffelement 60a, wie gestrichelt in der Figur 1 angedeutet, stangenförmig ausgebildet ist und aus zwei senkrecht von dem Stangenbereich 58a abstehenden Griffen besteht. Die Griffe stehen dabei an einem dem Kopplungsbereich abgewandten Ende des Stangenbereichs 58a in entgegengesetzte Richtungen von dem Stangenbereich 58a ab. Die Lenkstange 26a ist dabei T-förmig ausgebildet.

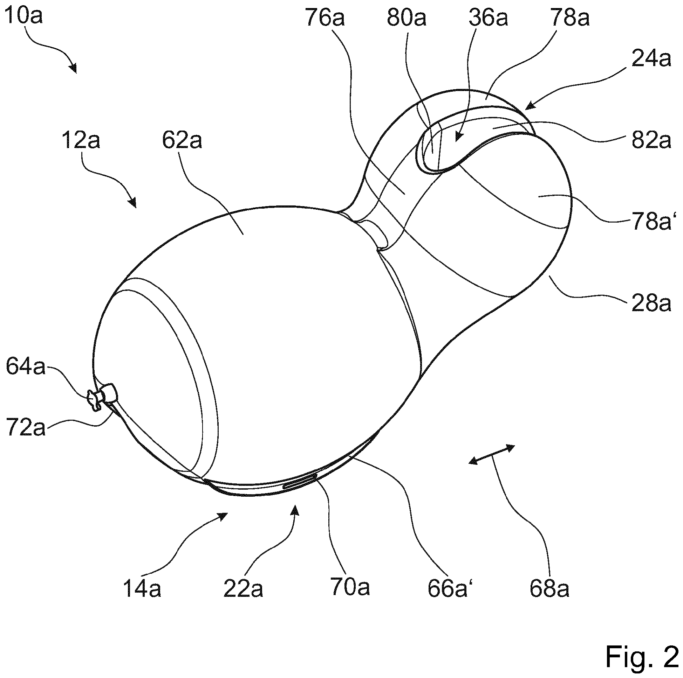

Die Rollersitzvorrichtung 10a ist von einer Tretrollersitzvorrichtung gebildet. Die Rollersitzvorrichtung 10a weist einen Sitzgrundkörper 12a auf. Der Sitzgrundkörper 12a dient unter anderem als Sitzfläche für einen Bediener bzw. Nutzer. Ferner ist der Sitzgrundkörper 12a eiförmig ausgebildet. Grundsätzlich wäre jedoch auch eine andere Formgebung des Sitzgrundkörpers 12a denkbar. Der Sitzgrundkörper 12a ist von einem gasgefüllten Hohlkörper gebildet. Der Sitzgrundkörper 12a weist eine luftdichte, elastische Hülle 62a auf. Die Hülle 62a besteht zu einem Großteil aus PVC, grundsätzlich wäre jedoch auch ein anderes Material denkbar. Die Hülle 62a weist eine Materialdicke von weniger als 0,25 mm auf. Das Material sowie die Materialdicke der Hülle 62a entsprechen dem Material und der Materialdicke einer Luftmatratze und/oder eines Schwimmflügels. Die Hülle 62a begrenzt einen mit Luft gefüllten Hohlraum des Sitzgrundkörpers 12a. Ferner weist die Hülle 62a ein Ventil 64a auf, über das Luft aus dem Hohlraum abgelassen oder hinzugefügt werden kann. Das Ventil 64a ist von einem Aufblasventil gebildet. Das Ventil 64a ist von einem Aufblasrückschlagventil gebildet. Für einen Transport kann aus dem Sitzgrundkörper 12a die Luft entfernt und später für eine Benutzung wieder hineingepumpt werden. Das Ventil 64a weist für ein Aufpumpen mit Luft ein Mundstück auf, über welches ein Bediener Luft in den Sitzgrundkörper 12a pumpen bzw. pusten kann. Das Ventil 64a entspricht einem Ventil einer Luftmatratze und/oder eines Schwimmflügels (Figur 2). Grundsätzlich wäre denkbar, dass der Hohlraum des Sitzgrundkörpers 12a nicht weiter sichtbar in mehrere Kammern unterteilt ist, die über Öffnungen miteinander verbunden sind. Dadurch könnte beispielsweise eine Stabilität des Sitzgrundkörpers 12a erhöht werden.

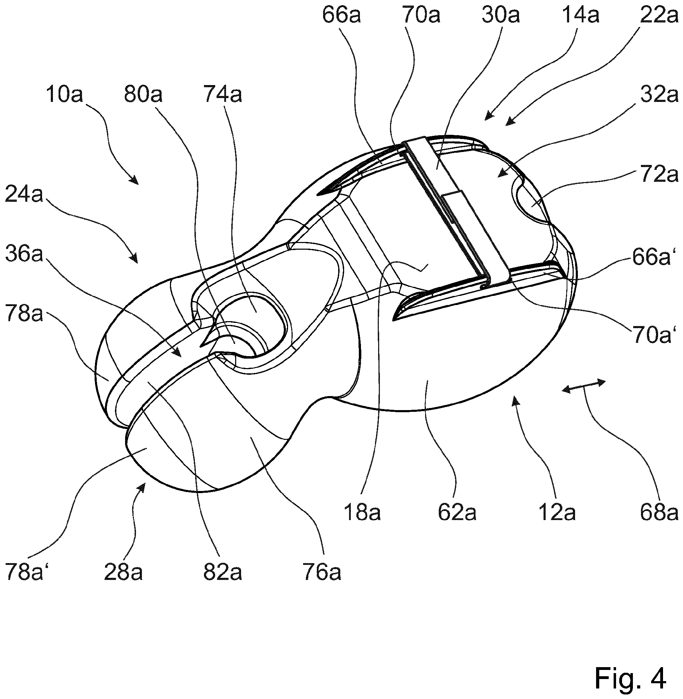

Des Weiteren weist die Rollersitzvorrichtung 10a eine erste Befestigungseinheit 14a auf. Die erste Befestigungseinheit 14a ist zu einer lösbaren Befestigung der Rollersitzvorrichtung 10a an dem Roller 16a vorgesehen. Der Sitzgrundkörper 12a ist teilweise einstückig mit der ersten Befestigungseinheit 14a ausgebildet ist. Die erste Befestigungseinheit 14a weist eine Auflagefläche 18a auf. Die Auflagefläche 18a ist in einem montierten Zustand der Rollersitzvorrichtung 10a auf dem Roller 16a dazu vorgesehen, den Sitzgrundkörper 12a gegen das Trittbrett 20a des Rollers 16a abzustützen. Die Auflagefläche 18a der ersten Befestigungseinheit 14a ist einstückig mit dem Sitzgrundkörper 12a ausgebildet. Die Auflagefläche 18a bildet eine Unterseite des Sitzgrundkörpers 12a. Die Auflagefläche 18a liegt in einem montierten Zustand direkt auf der Trittfläche 46a des Trittbretts 20a auf (Figur 1, 4).

Ferner weist die erste Befestigungseinheit 14a ein Aufnahmeelement 22a auf. Das Aufnahmeelement 22a ist in einem montierten Zustand der Rollersitzvorrichtung 10a auf dem Roller 16a dazu vorgesehen, das Trittbrett 20a des Rollers 16a teilweise zu umgreifen. Das Aufnahmeelement 22a besteht aus zwei parallel zueinander verlaufenden Stegen 66a, 66a'. Die Stege 66a, 66a' erstrecken sich mit ihrer Haupterstreckungsrichtung parallel zu einer Haupterstreckungsrichtung 68a der Rollersitzvorrichtung 10a. Die Stege 66a, 66a' bestehen aus einem harten Kunststoff und sind an den Sitzgrundkörper 12a angeklebt. Die Stege 66a, 66a' sind, bezogen auf die Haupterstreckungsrichtung 68a der Rollersitzvorrichtung 10a, auf gegenüberliegenden Seiten der Auflagefläche 18a angeordnet. Die Stege 66a, 66a' begrenzen die Auflagefläche 18a in einer Richtung senkrecht zu der Haupterstreckungsrichtung 68a der Rollersitzvorrichtung 10a und parallel zu einer Haupterstreckungsebene der Auflagefläche 18a. Dadurch kann ein Abrutschen der Auflagefläche 18a von der Trittfläche 46a des Trittbretts 20a des Rollers 16a verhindert werden. Die Stege 66a, 66a' weisen jeweils eine Durchgangsöffnung 70a, 70a' auf. Die Durchgangsöffnungen 70a, 70a' erstrecken sich jeweils in einer Richtung senkrecht zu der Haupterstreckungsrichtung 68a der Rollersitzvorrichtung 10a und parallel zu einer Haupterstreckungsebene der Auflagefläche 18a durch die Stege 66a, 66a'. Ferner sind die Durchgangsöffnungen 70a, 70a' jeweils, senkrecht zu der Haupterstreckungsrichtung 68a der Rollersitzvorrichtung 10a und, parallel zu einer Haupterstreckungsebene der Auflagefläche 18a betrachtet, annähernd mittig in die Stege 66a, 66a' eingebracht. Ferner sind die Durchgangsöffnungen 70a, 70a' von länglichen Ausnehmungen gebildet. Eine lange Seite der Durchgangsöffnungen 70a, 70a' verläuft dabei parallel zu einer Haupterstreckungsrichtung der Stege 66a, 66a'. Die zwei Stege 66a, 66a' und die Auflagefläche 18a der ersten Befestigungseinheit 14a bilden einen Aufnahmebereich 32a zur Aufnahme des Trittbretts 20a des Rollers 16a. Das Trittbrett 20a ist in einem montierten Zustand der Rollersitzvorrichtung 10a auf dem Roller 16a in dem Aufnahmebereich 32a des Aufnahmeelements 22a der ersten Befestigungseinheit 14a aufgenommen (Figur 1, 4).

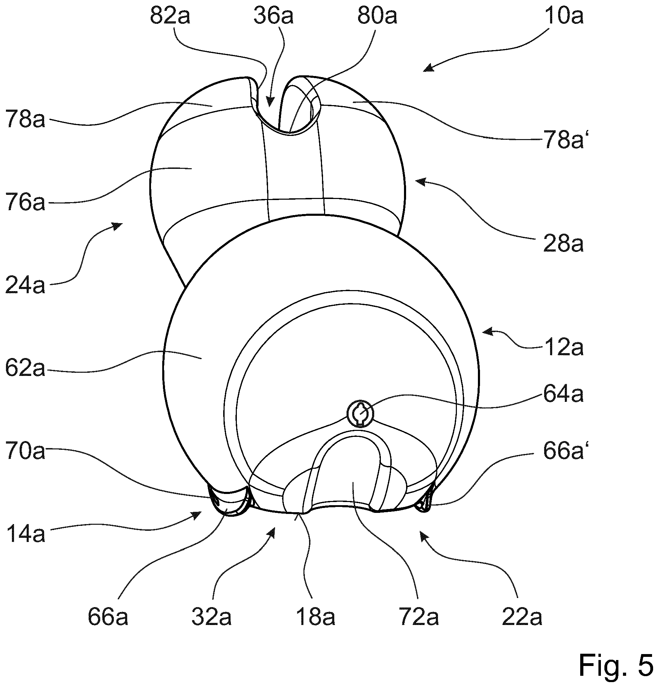

Auf einer Unterseite des Sitzgrundkörpers 12a schließt an die Auflagefläche 18a, entlang der Haupterstreckungsrichtung 68a der Rollersitzvorrichtung 10a betrachtet, direkt eine hintere Aufnahme 72a an. Die hintere Aufnahme 72a übergreift in einem montieren Zustand teilweise die Bremsvorrichtung 50a des Rollers 16a. Des Weiteren ist die hintere Aufnahme 72a von einer Vertiefung gebildet die teilweise eine Negativform der Bremsvorrichtung 50a aufweist. Während eines Betrieb kann, beispielsweise durch Gewichtsverlagerung, der Sitzgrundkörper 12a somit von einem Bediener derart verformt werden, dass die hintere Aufnahme 72a auf die Bremsvorrichtung 50a drückt und diese dadurch zur Erreichung einer Bremswirkung betätigt (Figur 4, 5.

Auf einer der hinteren Aufnahme 72a gegenüberliegenden Seite der Auflagefläche 18a schließt auf der Unterseite des Sitzgrundkörpers 12a an die Auflagefläche 18a direkt eine vordere Aufnahme 74a an. Die vordere Aufnahme 74a übergreift in einem montierten Zustand den nicht weiter sichtbaren Aufnahmebereich des Grundkörpers 40a des Rollers 16a. Die vordere Aufnahme 74a ist von einer Vertiefung gebildet, die teilweise eine Negativform des nicht weiter sichtbaren Aufnahmebereichs und eines weiteren Teils des Grundkörpers 40a des Rollers 16a aufweist. Ferner bildet die vordere Aufnahme 74a und die hintere Aufnahme 72a jeweils einen Teil des Sitzgrundkörpers 12a (Figur 4).

Das Ventil 64a der Hülle 62a des Sitzgrundkörpers 12a ist, in einer für einen Betrieb vorgesehenen Ausrichtung der Rollersitzvorrichtung 10a betrachtet, oberhalb der hinteren Aufnahme 72a der Rollersitzvorrichtung 10a angeordnet. Das Ventil 64a ist auf einer der Auflagefläche 18a abgewandten Seite der Aufnahme 72a angeordnet. Dadurch kann insbesondere ein ansprechendes Design erzeugt werden. Vorzugsweise kann dadurch beispielsweise die stilistische Andeutung eines Auspuffs erzeugt werden. Grundsätzlich wäre jedoch auch eine andere Anordnung des Ventils 64a denkbar.

Die Rollersitzvorrichtung 10a weist des Weiteren eine zweite Befestigungseinheit 24a auf. Die zweite Befestigungseinheit 24a ist teilweise kugelförmig ausgebildet, grundsätzlich wäre jedoch auch eine andere Formgebung denkbar. Die zweite Befestigungseinheit 24a ist mit der Lenkstange 26a des Rollers 16a lösbar verbindbar. Der Sitzgrundkörper 12a ist einstückig mit der zweiten Befestigungseinheit 24a ausgebildet ist. Der Sitzgrundkörper 12a und die Befestigungseinheit 24a sind aus in einem Stück hergestellt. Die zweite Befestigungseinheit 24a ist ebenfalls von einem gasgefüllten Hohlkörper gebildet. Die zweite Befestigungseinheit 24a weist eine luftdichte, elastische Hülle 76a auf. Die Hülle 76a besteht zu einem Großteil aus PVC, grundsätzlich wäre jedoch auch ein anderes Material denkbar. Die Hülle 76a ist einstückig mit der Hülle 62a des Sitzgrundkörpers 12a verbunden. Die Hülle 76a der zweiten Befestigungseinheit 24a begrenzt einen mit Luft gefüllten Hohlraum der zweiten Befestigungseinheit 24a. Der Hohlraum der zweiten Befestigungseinheit 24a ist einstückig mit dem Hohlraum des Sitzgrundkörpers 12a verbunden. Die Befestigungseinheit 24a und der Sitzgrundkörper 12a bilden einen gemeinsamen Hohlraum. Grundsätzlich wäre jedoch auch denkbar, dass zwischen den Hohlräumen der Befestigungseinheit 24a und dem Sitzgrundkörper 12a eine nicht weiter sichtbare, elastische Wand angeordnet ist, welche die Hohlräume luftdicht zueinander abtrennt. Dabei wäre ferner denkbar, dass die Hülle 76a der zweiten Befestigungseinheit 24a ein zweites Ventil aufweist, über das Luft aus dem Hohlraum abgelassen oder hinzugefügt werden kann.

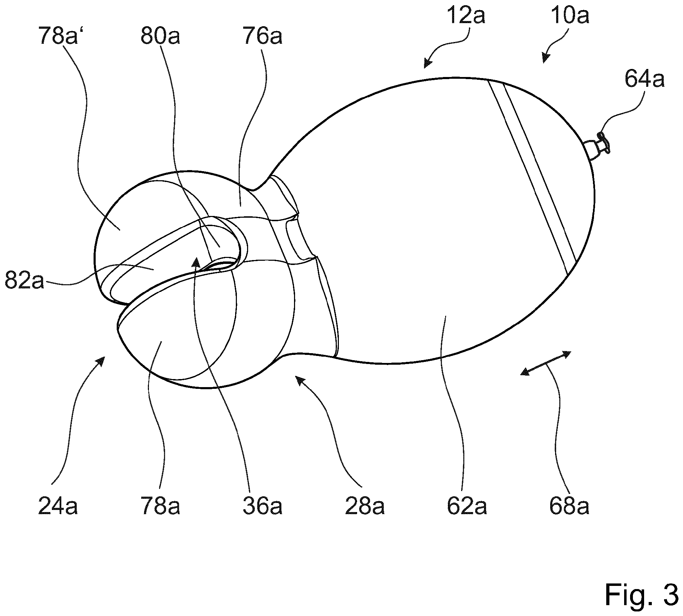

Des Weiteren weist die zweite Befestigungseinheit 24a ein Aufnahmeelement 28a auf. Das Aufnahmeelement 28a ist in einem montierten Zustand der Rollersitzvorrichtung 10a auf dem Roller 16a dazu vorgesehen, die Lenkstange 26a des Rollers 16a teilweise zu umgreifen. Das Aufnahmeelement 28a ist in einem montierten Zustand der Rollersitzvorrichtung 10a auf dem Roller 16a dazu vorgesehen, den Stangenbereich 58a der Lenkstange 26a des Rollers 16a teilweise zu umgreifen. Das Aufnahmeelement 28a ist, entlang der Haupterstreckungsrichtung 68a der Rollersitzvorrichtung 10a betrachtet, in einer Richtung von dem Sitzgrundkörper 12a zu der zweiten Befestigungseinheit 24a hin in zwei Teilelemente 78a, 78a' aufgespalten. Das Aufnahmeelement 28a teilt sich, in einem montierten Zustand betrachtet, zu der Lenkstange 26a hin auf und erzeugt einen Aufnahmebereich 36a. Der Aufnahmebereich 36a dient zur Aufnahme des Stangenbereichs 58a der Lenkstange 26a. Der Aufnahmebereich 36a ist von einem breiten Spalt gebildet, der sich senkrecht zu der Haupterstreckungsrichtung 68a der Rollersitzvorrichtung 10a erstreckt und von den Teilelementen 78a, 78a' des Aufnahmeelements 28a begrenzt ist. Der Aufnahmebereich 36a besteht aus einem Grundaufnahmebereich 80a und einem Einführbereich 82a. Der Grundaufnahmebereich 80a ist zylindrisch ausgebildet, wobei eine Zylinderachse senkrecht zu der Haupterstreckungsrichtung 68a der Rollersitzvorrichtung 10a verläuft. Der Grundaufnahmebereich 80a ist an beiden Enden und zu dem Einführbereich 82a hin geöffnet. Der Grundaufnahmebereich 80a dient dazu, den Stangenbereich 58a der Lenkstange 26a des Rollers 16a in einem Endmontagezustand aufzunehmen. Ein Querschnitt des Grundaufnahmebereichs 80a entspricht annähernd einem Querschnitt des Stangenbereichs 58a der Lenkstange 26a. Der Einführbereich 82a schließt, entlang der Haupterstreckungsrichtung 68a der Rollersitzvorrichtung 10a betrachtet, direkt an den Grundaufnahmebereich 80a in einer Richtung von dem Sitzgrundkörper 12a zu der zweiten Befestigungseinheit 24a hin an. Ferner öffnet der Einführbereich 82a den Grundaufnahmebereich 80a in die Richtung von dem Sitzgrundkörper 12a zu der zweiten Befestigungseinheit 24a hin vollständig. Über den Einführbereich 82a kann der Stangenbereich 58a der Lenkstange 26a in einen Endmontagezustand in den Grundaufnahmebereich 80a gebracht werden. Der Einführbereich 82a ist gegenüber dem Grundaufnahmebereich 80a schmaler. Folglich müssen die Teilelemente 78a, 78a' des Aufnahmeelements 28a für eine Montage nach außen elastisch ausgelenkt werden. Dadurch kann ein ungewolltes Lösen des Stangenbereichs 58a der Lenkstange 26a aus dem Grundaufnahmebereich 80a verhindert werden (Figur 3).

Ferner weist die erste Befestigungseinheit 14a ein Befestigungsmittel 30a auf. Das Befestigungsmittel 30a ist in einem montierten Zustand dazu vorgesehen, das Trittbrett 20a des Rollers 16a in dem Aufnahmebereich 32a des Aufnahmeelements 22a lösbar zu fixieren. Das Befestigungsmittel 30a ist von einem Klettverschluss gebildet. Das Befestigungsmittel 30a ist von einem Klettverschlussband gebildet. Das Befestigungsmittel 30a ist durch die Durchgangsöffnungen 70a, 70a' der Stege 66a, 66a' geführt und durch eine Klettverbindung geschlossen. Das Befestigungsmittel 30a ergibt in einem geschlossenen Zustand der Klettverbindung ein in sich geschlossenes Band. Zur Montage und Fixierung der Rollersitzvorrichtung 10a auf dem Roller 16c, wird das Aufnahmeelement 22a der ersten Befestigungseinheit 14a auf das Trittbrett 20a aufgesetzt und das Aufnahmeelement 28a der zweiten Befestigungseinheit 24a auf den Stangenbereich 58a der Lenkstange 26a aufgeschoben. Anschließend kann das Befestigungsmittel 30a zur Fixierung durch die Durchgangsöffnungen 70a, 70a' geführt werden und unterhalb des Trittbretts 20a geschlossen werden (Figur 1, 4).

Die erste Befestigungseinheit 14a und die zweite Befestigungseinheit 24a sind jeweils werkzeuglos mit dem Roller 16a verbindbar und werkzeuglos von dem Roller 16a trennbar. Folglich kann die Rollersitzvorrichtung 10a frei von Werkzeug oder besonderen Schlüsseln an dem Roller 16a montiert und demontiert werden. Eine Montage kann insbesondere auch von einem Kind ohne Hilfe der Eltern erfolgen.

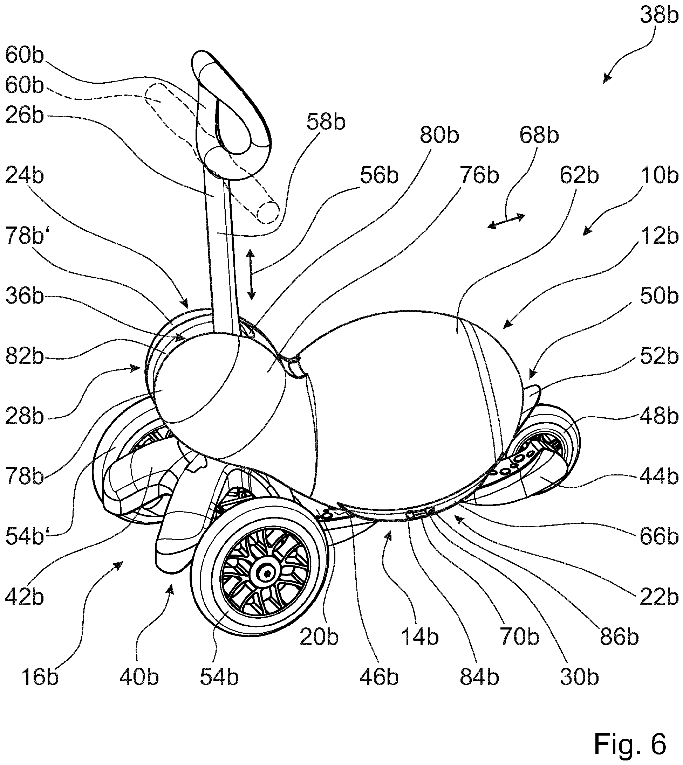

In den Figuren 6 bis 11 sind drei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 5, verwiesen werden kann. Zur Unterscheidung der Ausführungsbeispiele ist der Buchstabe a in den Bezugszeichen des Ausführungsbeispiels in den Figuren 1 bis 5 durch die Buchstaben b bis d in den Bezugszeichen der Ausführungsbeispiele der Figuren 6 bis 11 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 bis 5, verwiesen werden.

Figur 6 zeigt eine alternative erfindungsgemäße Rollersitzvorrichtung 10b für einen Roller 16b. Der Roller 16b und die Rollersitzvorrichtung 10b bilden ein System 38b.

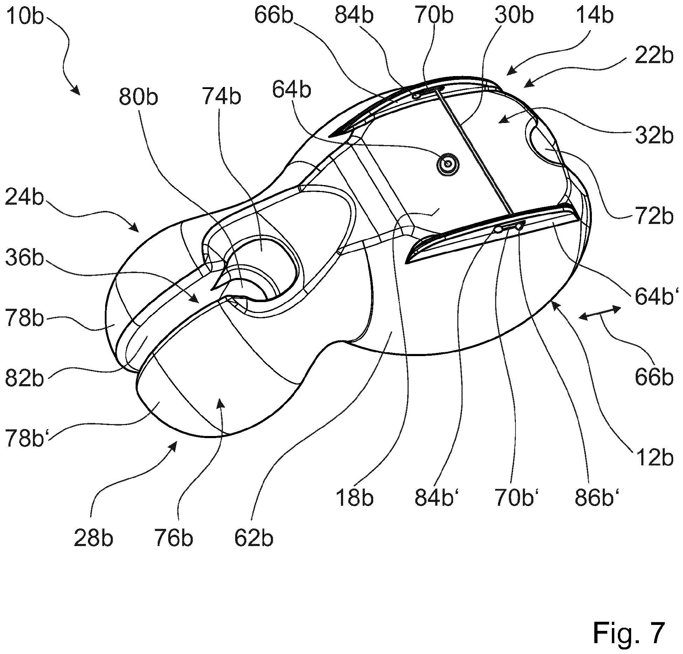

Die Rollersitzvorrichtung 10b ist von einer Tretrollersitzvorrichtung gebildet. Die Rollersitzvorrichtung 10b weist einen Sitzgrundkörper 12b auf. Der Sitzgrundkörper 12b ist von einem gasgefüllten Hohlkörper gebildet. Der Sitzgrundkörper 12b weist eine luftdichte, elastische Hülle 62b auf. Ferner ist der Sitzgrundkörper 12b in einem Rotationsgussverfahren hergestellt. Grundsätzlich wären jedoch auch andere Verfahren denkbar wie beispielsweise Blasform-Verfahren. Die Hülle 62b besteht zu einem Großteil aus PVC, grundsätzlich wäre jedoch auch ein anderes Material denkbar. Die Hülle 62b weist eine Materialdicke zwischen 0,5 mm und 3 mm auf. Das Material sowie die Materialdicke der Hülle 62b entsprechen dem Material und der Materialdicke eines Gymnastikballs. Die Hülle 62b begrenzt einen mit Luft gefüllten Hohlraum des Sitzgrundkörpers 12b. Ferner weist die Hülle 62b ein Ventil 64b auf, über das Luft aus dem Hohlraum abgelassen oder hinzugefügt werden kann. Das Ventil 64b ist von einem Steckventil gebildet. Das Ventil 64b besteht aus einer Öffnung und aus einem die Öffnung verschließenden Stöpsel. Für einen Transport kann aus dem Sitzgrundkörper 12b die Luft entfernt und später für eine Benutzung wieder hineingepumpt werden. Für ein Aufpumpen wird der Stöpsel des Ventils 64b entfernt und es kann mittels einer Pumpe Luft in den Sitzgrundkörper 12b gepumpt werden. Anschließend wird der Stöpsel wieder in die Öffnung des Ventils 64b gesteckt und das Ventil 64b ist verschlossen. Das Ventil 64b entspricht einem Ventil eines Balls, insbesondere eines Gymnastikballs (Figur 7).

Ferner weist die Rollersitzvorrichtung 10b eine erste Befestigungseinheit 14b auf. Die Befestigungseinheit 14b ist zu einer lösbaren Befestigung der Rollersitzvorrichtung 10b an dem Roller 16b vorgesehen. Die erste Befestigungseinheit 14b ist teilweise einstückig mit einem Sitzgrundkörper 12b der Rollersitzvorrichtung 10b ausgebildet. Die erste Befestigungseinheit 14b weist eine Auflagefläche 18b auf. Ferner weist die erste Befestigungseinheit 14b ein Aufnahmeelement 22b auf. Das Aufnahmeelement 22b ist in einem montierten Zustand der Rollersitzvorrichtung 10b auf dem Roller 16b dazu vorgesehen, ein Trittbrett 20b des Rollers 16b teilweise zu umgreifen. Das Aufnahmeelement 22b besteht aus zwei parallel zueinander verlaufenden Stegen 66b, 66b'. Die Stege 66b, 66b' sind einstückig mit dem Sitzgrundkörper 12b ausgebildet. Der Sitzgrundkörper 12b und die Stege 66b, 66b' sind aus einem Guss hergestellt. Die Stege 66b, 66b' weisen jeweils eine Durchgangsöffnung 70b, 70b' auf. Die Durchgangsöffnungen 70b, 70b' erstrecken sich jeweils in einer Richtung senkrecht zu einer Haupterstreckungsrichtung 68b der Rollersitzvorrichtung 10b und parallel zu einer Haupterstreckungsebene der Auflagefläche 18b durch die Stege 66b, 66b'. Ferner sind die Durchgangsöffnungen 70b, 70b', jeweils senkrecht zu der Haupterstreckungsrichtung 68b der Rollersitzvorrichtung 10b und parallel zu einer Haupterstreckungsebene der Auflagefläche 18b betrachtet, annähernd mittig in die Stege 66b, 66b' eingebracht. Ferner sind die Durchgangsöffnungen 70b, 70b' von länglichen Ausnehmungen gebildet. Eine lange Seite der Durchgangsöffnungen 70b, 70b' verläuft dabei parallel zu einer Haupterstreckungsrichtung der Stege 66b, 66b'. Die Durchgangsöffnungen 70b, 70b' weisen jeweils an einem Ende einen verbreiterten Bereich 84b, 84b' auf. Die verbreiterten Bereiche 84b, 84b' weisen jeweils einen teilweise kreisförmigen Querschnitt auf (Figur 7).

Das Ventil 64b der Hülle 62b des Sitzgrundkörpers 12b ist in einem Bereich der Auflagefläche 18b angeordnet. Das Ventil 64b ist in der Auflagefläche 18b angeordnet. Dadurch kann erreicht werden, dass das Ventil 64b während eines Betriebs an einer Trittfläche 46b des Trittbretts 20b des Rollers 16b anliegt. Dadurch kann wiederum ein herausspringen des Stöpsels des Ventils 64b verhindert werden. Insbesondere bei einer Belastung durch einen Bediener wird der Stöpsel des Ventils 64b fest in der Öffnung des Ventils 64b gehalten. Grundsätzlich wäre jedoch auch eine andere Anordnung des Ventils 64b denkbar.

Ferner weist die erste Befestigungseinheit 14b ein Befestigungsmittel 30b auf. Das Befestigungsmittel 30b ist in einem montierten Zustand dazu vorgesehen, das Trittbrett 20b des Rollers 16b in einem Aufnahmebereich 32b des Aufnahmeelements 22b lösbar zu fixieren. Das Befestigungsmittel 30b ist von einem Gummiband gebildet. Das Befestigungsmittel 30b ist von einem Gummiband mit Fixierelementen 86b, 86b' gebildet. Die Fixierelemente 86b, 86b' sind jeweils an den beiden Enden des Gummibands angeordnet. Die Fixierelemente 86b, 86b' stellen jeweils vergrößerte Kugeln dar, die einen gegenüber dem Rest des Gummibands vergrößerten Querschnitt aufweisen. Das Befestigungsmittel 30b ist einstückig ausgebildet. Ferner ist das Befestigungsmittel 30b jeweils durch die Fixierelemente 86b, 86b' in den Durchgangsöffnungen 70b, 70b' der Stege 66b, 66b' gehalten. Die Fixierelemente 86b, 86b' werden in den verbreiterten Bereichen 84b, 84b' durch die Durchgangsöffnungen 70b, 70b' geführt und durch Verschieben in einen von dem verbreiterten Bereich 84b, 84b' differierenden Bereich gehalten. Zur Montage und Fixierung der Rollersitzvorrichtung 10b auf dem Roller 16b, wird das Aufnahmeelement 22b der ersten Befestigungseinheit 14b auf das Trittbrett 20b aufgesetzt und das Aufnahmeelement 28b der zweiten Befestigungseinheit 24b auf den Stangenbereich 58b der Lenkstange 26b aufgeschoben. Anschließend kann das Befestigungsmittel 30b zur Fixierung mit den Fixierelementen 86b, 86b' durch die verbreiterten Bereiche 84b, 84b' der Durchgangsöffnungen 70b, 70b' geführt werden. In einem nächsten Schritt werden die Fixierelemente 86b, 86b' in von den verbreiterten Bereichen 84b, 84b' differierende Bereiche geschoben, wo sie nicht durch die Durchgangsöffnungen 70b, 70b' passen und somit dort gehalten werden (Figur 6, 7).

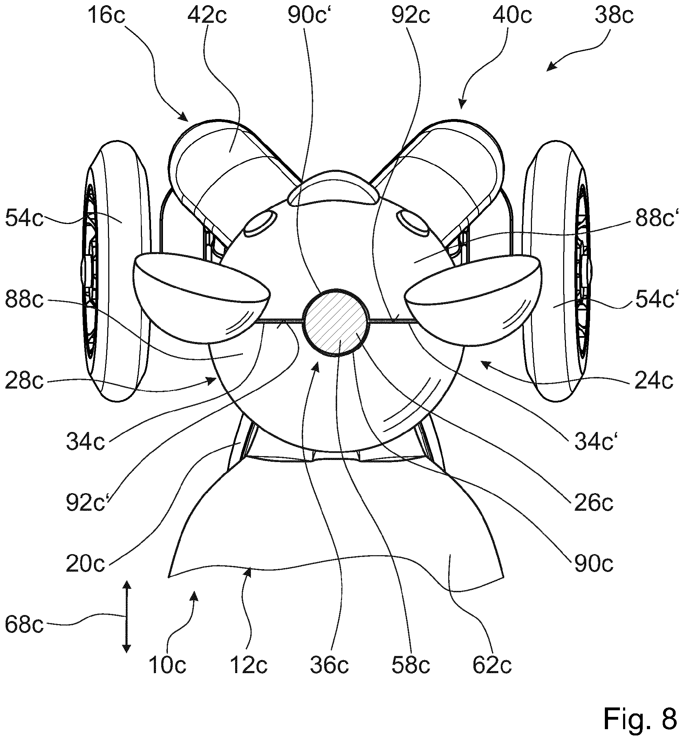

Figur 8 zeigt einen Teilausschnitt einer weiteren alternativen erfindungsgemäßen Rollersitzvorrichtung 10c für einen Roller 16c. Der Roller 16c ist teilweise geschnitten dargestellt. Der Roller 16c und die Rollersitzvorrichtung 10c bilden ein System 38c. Die Rollersitzvorrichtung 10c weist einen Sitzgrundkörper 12c, eine ersten Befestigungseinheit 14c und eine zweiten Befestigungseinheit 24c auf.

Die zweite Befestigungseinheit 24c ist teilweise kugelförmig ausgebildet, grundsätzlich wäre jedoch auch eine andere Formgebung denkbar. Die zweite Befestigungseinheit 24c ist mit der Lenkstange 26c des Rollers 16c lösbar verbindbar. Der Sitzgrundkörper 12c ist einstückig mit der zweiten Befestigungseinheit 24c ausgebildet ist. Die zweite Befestigungseinheit 24c ist an den Sitzgrundkörper 12c angeklebt. Ferner ist die zweite Befestigungseinheit 24c von einem Vollkörper aus geschäumtem Polystyrol gebildet. Die zweite Befestigungseinheit 24c weist teilweise die Form eines Tierkopfes auf. Grundsätzlich sind jedoch auch andere Formgebungen denkbar. Die zweite Befestigungseinheit 24c erlaubt, insbesondere durch ihre erfindungsgemäße Ausgestaltung, verschiedene Formgebungen, die ein ansprechendes und individuelles Design erlauben.

Des Weiteren weist die zweite Befestigungseinheit 24c ein Aufnahmeelement 28c auf. Das Aufnahmeelement 28c besteht aus zwei Halbkugeln 88c, 88c'. Die Halbkugeln 88c, 88c' weisen jeweils eine halbzylinderförmige Ausnehmung 90c, 90c' auf. Die Ausnehmungen 90c, 90c' sind jeweils in ebene Kreisflächen 92c, 92c' der jeweiligen Halbkugel 88c, 88c' eingebracht. Die Ausnehmungen 90c, 90c' erstrecken sich jeweils durch eine Mitte und über eine gesamte Erstreckung der ebenen Kreisflächen 92c, 92c' der jeweiligen Halbkugel 88c, 88c'. In einem über die Kreisflächen 92c, 92c' verbundenen Zustand der Halbkugeln 88c, 88c' ergeben die beiden halbzylinderförmigen Ausnehmungen 90c, 90c' eine zylindrische Ausnehmung. Ferner bilden die beiden halbzylinderförmigen Ausnehmungen 90c, 90c' jeweils einen Aufnahmebereich 36c. Der Aufnahmebereich 36c dient zur Aufnahme eines Stangenbereichs 58c einer Lenkstange 26c des Rollers 16c.

Ferner weist die zweite Befestigungseinheit 24c zwei Befestigungsmittel 34c, 34c' auf. Die Befestigungsmittel 34c, 34c' sind in einem montierten Zustand der Rollersitzvorrichtung 10c auf dem Roller 16c dazu vorgesehen, die Lenkstange 26c des Rollers 16c in dem Aufnahmebereich 36c des Aufnahmeelements 28c lösbar zu fixieren. Die Befestigungsmittel 34c, 34c' sind jeweils von einem Klettverschluss gebildet. Die Befestigungsmittel 34c, 34c' bestehen jeweils aus zwei Klettverschlussseiten. Die Befestigungsmittel 34c, 34c' sind jeweils auf gegenüberliegenden Seiten des Aufnahmebereichs 36c an den ebenen Kreisflächen 92c, 92c' der Halbkugeln 88c, 88c' angeordnet. Die Klettverschlussseiten der Befestigungsmittel 34c, 34c' sind jeweils an gegenüberliegenden Bereichen von gegenüberliegenden Kreisflächen 92c, 92c' angeordnet. Demnach sind jeder Halbkugel 88c, 88c' jeweils zwei Klettverschlussseiten von differierenden Befestigungsmitteln 34c, 34c' zugeordnet. Zur Montage und Fixierung der Rollersitzvorrichtung 10c auf dem Roller 16c, wird das Aufnahmeelement 22c der ersten Befestigungseinheit 14c auf das Trittbrett 20c aufgesetzt und die erste Halbkugel 88c des Aufnahmeelements 28c der zweiten Befestigungseinheit 24c mit der ersten Ausnehmung 90c gegen den Stangenbereich 58c der Lenkstange 26c des Rollers 16c geschoben. Anschließend kann die zweite Halbkugel 88c' des Aufnahmeelements 28c der zweiten Befestigungseinheit 24c über die Befestigungsmittel 34c, 34c' mit der ersten Halbkugel 88c verbunden werden. Der Stangenbereich 58c der Lenkstange 26c des Rollers 16c ist dabei zwischen den zwei Halbkugeln 88c, 88c' in dem Aufnahmebereich 36c eingeschlossen.

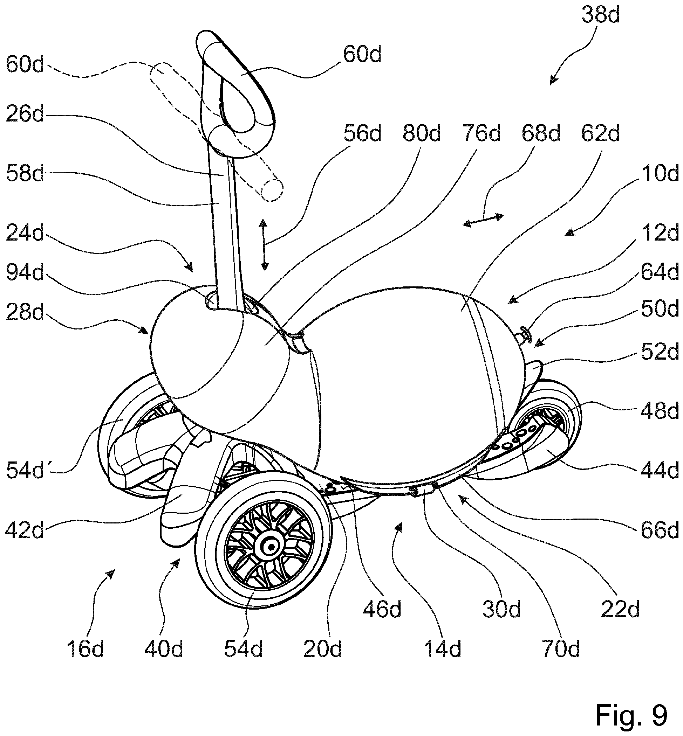

Figur 9 zeigt eine weitere alternative erfindungsgemäße Rollersitzvorrichtung 10d für einen Roller 16d. Der Roller 16d und die Rollersitzvorrichtung 10d bilden ein System 38d. Der Roller 16d ist von einem Tretroller gebildet. Der Roller 16d ist von einem Kindertretroller gebildet. Der Roller 16d ist von einem Kickboard gebildet. Der Roller 16d weist einen Grundkörper 40d und eine Lenkstange 26d auf. Die Lenkstange 26d ist von dem Grundkörper 40d trennbar ausgebildet. Die Lenkstange 26a ist von dem Grundkörper 40d werkzeuglos trennbar ausgebildet

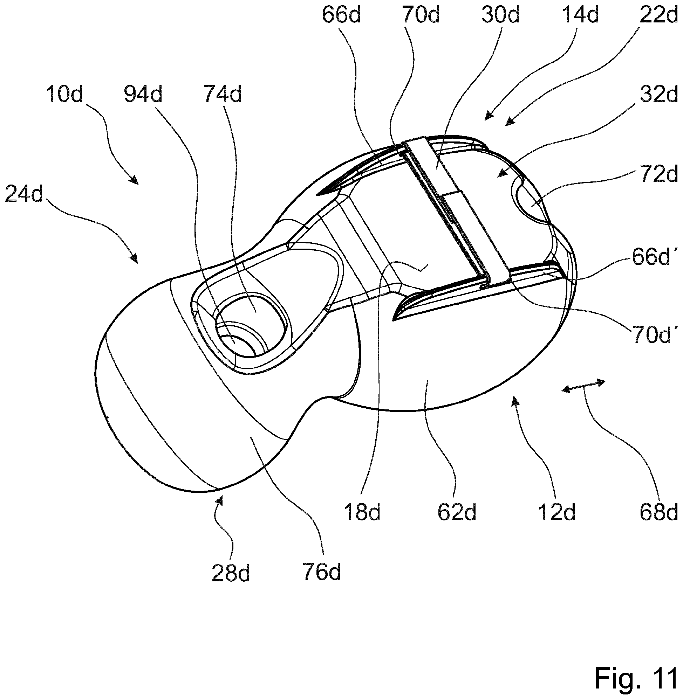

Die Rollersitzvorrichtung 10d ist von einer Tretrollersitzvorrichtung gebildet. Die Rollersitzvorrichtung 10d weist einen Sitzgrundkörper 12d auf. Des Weiteren weist die Rollersitzvorrichtung 10d eine erste Befestigungseinheit 14d auf. Die erste Befestigungseinheit 14d ist zu einer lösbaren Befestigung der Rollersitzvorrichtung 10d an dem Roller 16d vorgesehen. Der Sitzgrundkörper 12d ist teilweise einstückig mit der ersten Befestigungseinheit 14d ausgebildet (Figur 11).

Die Rollersitzvorrichtung 10d weist des Weiteren eine zweite Befestigungseinheit 24d auf. Die zweite Befestigungseinheit 24d ist teilweise kugelförmig ausgebildet, grundsätzlich wäre jedoch auch eine andere Formgebung denkbar. Die zweite Befestigungseinheit 24d ist mit der Lenkstange 26d des Rollers 16d lösbar verbindbar. Der Sitzgrundkörper 12d ist einstückig mit der zweiten Befestigungseinheit 24d ausgebildet. Der Sitzgrundkörper 12d und die Befestigungseinheit 24d sind aus einem Stück hergestellt. Die zweite Befestigungseinheit 24d ist ebenfalls von einem gasgefüllten Hohlkörper gebildet (Figur 11).

Des Weiteren weist die zweite Befestigungseinheit 24d ein Aufnahmeelement 28d auf. Das Aufnahmeelement 28d ist in einem montierten Zustand der Rollersitzvorrichtung 10d auf dem Roller 16d dazu vorgesehen, die Lenkstange 26d des Rollers 16d vollständig zu umgreifen. Das Aufnahmeelement 28d ist in einem montierten Zustand der Rollersitzvorrichtung 10d auf dem Roller 16d dazu vorgesehen, den Stangenbereich 58d der Lenkstange 26d des Rollers 16d vollständig zu umgreifen. Das Aufnahmeelement 28d der zweiten Befestigungseinheit 24d weist eine Durchgangsöffnung 94d auf, die in einer Ebene eine geschlossene, unterbrechungsfreie Außenkontur aufweist. Die Durchgangsöffnung 94d weist, in einem montierten Zustand, in einer Ebene senkrecht zu einer Haupterstreckungsrichtung 56d der Lenkstange 26d eine geschlossene, unterbrechungsfreie Außenkontur auf. Die zweite Befestigungseinheit 24d ist um die Durchgangsöffnung 94d herum von einem geschlossenen, gasgefüllten Hohlkörper gebildet (Figur 9, 11).

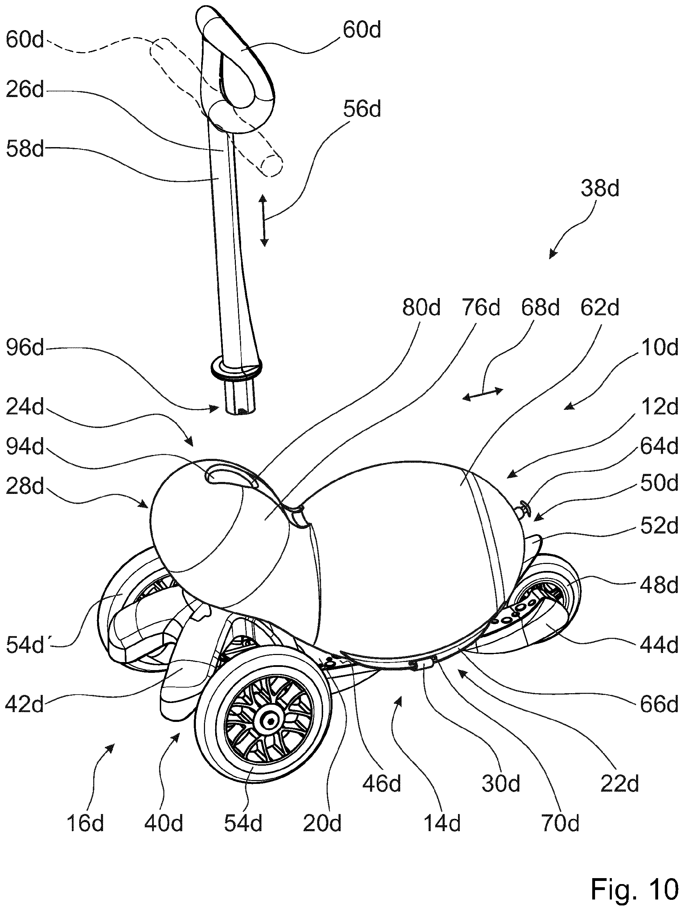

Die erste Befestigungseinheit 14d und die zweite Befestigungseinheit 24d sind jeweils werkzeuglos mit dem Roller 16d verbindbar und werkzeuglos von dem Roller 16d trennbar. Folglich kann die Rollersitzvorrichtung 10d frei von Werkzeug oder besonderen Schlüsseln an dem Roller 16d montiert und demontiert werden. Eine Montage kann insbesondere auch von einem Kind ohne Hilfe der Eltern erfolgen. Zur Befestigung der zweiten Befestigungseinheit 24d der Rollersitzvorrichtung 10d an dem Roller 16d muss die Lenkstange 26d von dem Grundkörper 40d getrennt werden. Die Lenkstange 26d wird dabei durch Lösen eines Rastmechanismus 96d von dem Grundkörper 40d getrennt. Grundsätzlich wäre jedoch auch ein anderer, dem Fachmann als sinnvoll erscheinender Verbindungsmechanismus denkbar. Grundsätzlich sind dabei auch Mechanismen denkbar, für die Werkzeug zu einem Lösen und/oder zu einem Herstellen der Verbindung nötig ist. Anschließend kann die Rollersitzvorrichtung 10d auf den Roller 16d aufgesetzt und gegebenenfalls mit der ersten Befestigungseinheit 14d fixiert werden. Alternativ kann die Rollersitzvorrichtung 10d, durch Aufschieben der zweiten Befestigungseinheit 24d über die Durchgangsöffnung 94d auf der Lenkstange 26d, auch erst mit der Lenkstange 26 verbunden werden. In einem nächsten Schritt wird die Lenkstange 26d entlang ihrer Haupterstreckungsrichtung 56d durch die Durchgangsöffnung 94d der zweiten Befestigungseinheit 24d in Richtung des Grundkörpers 40d gebracht und anschließend mit diesem verrastet. Ein Lösen der Rollersitzvorrichtung 10d von dem Roller 16d ist danach nur noch durch ein Trennen der Lenkstange 26d von dem Grundkörper 40d möglich (Figur 10).

### Bezugszeichen

- 10: Rollersitzvorrichtung
- 12: Sitzgrundkörper
- 14: Befestigungseinheit
- 16: Roller
- 18: Auflagefläche
- 20: Trittbrett
- 22: Aufnahmeelement
- 24: Befestigungseinheit
- 26: Lenkstange
- 28: Aufnahmeelement
- 30: Befestigungsmittel
- 32: Aufnahmebereich
- 34: Befestigungsmittel
- 36: Aufnahmebereich
- 38: System
- 40: Grundkörper
- 42: Fahrwerksträger
- 44: Fahrwerksträger
- 46: Trittfläche
- 48: Rolle
- 50: Bremsvorrichtung
- 52: Element
- 54: Rolle
- 56: Haupterstreckungsrichtung
- 58: Stangenbereich
- 60: Griffelement
- 62: Hülle
- 64: Ventil
- 66: Steg
- 68: Haupterstreckungsrichtung
- 70: Durchgangsöffnung
- 72: Aufnahme
- 74: Aufnahme
- 76: Hülle
- 78: Teilelement
- 80: Grundaufnahmebereich
- 82: Einführbereich
- 84: Bereich
- 86: Fixierelement
- 88: Halbkugel
- 90: Ausnehmung
- 92: Kreisfläche
- 94: Durchgangsöffnung
- 96: Rastmechanismus

## Patentansprüche

1. Rollersitzvorrichtung, insbesondere Tretrollersitzvorrichtung, mit einem Sitzgrundkörper (12a; 12b; 12c; 12d), mit zumindest einer ersten Befestigungseinheit (14a; 14b; 14c; 14d) zur Befestigung an einem Roller (16a; 16b; 16c; 16d), wobei die zumindest eine erste Befestigungseinheit (14a; 14b; 14c; 14d) zumindest eine Auflagefläche (18a; 18b; 18c; 18d) aufweist, die in einem montierten Zustand dazu vorgesehen ist, den Sitzgrundkörper (12a; 12b; 12c; 12d) zumindest gegen ein Trittbrett (20a; 20b; 20c; 20d) des Rollers (16a; 16b; 16c; 16d) abzustützen, und mit zumindest einer zweiten Befestigungseinheit (24a; 24b; 24c; 24d), die mit einer Lenkstange (26a; 26b; 26c; 26d) des Rollers (16a; 16b; 16c; 16d) lösbar verbindbar ist, wobei der Sitzgrundkörper (12a; 12b; 12c; 12d) zumindest teilweise von einem gasgefüllten Hohlkörper gebildet ist, **dadurch gekennzeichnet, dass** die zumindest eine zweite Befestigungseinheit (24a; 24b; 24d) zumindest teilweise von einem gasgefüllten Hohlkörper gebildet ist und wobei die gasgefüllten Hohlkörper eine feste und/oder eine elastische Außenhülle aufweisen, die einen darin eingeschlossenen Innenraum vollständig begrenzt.

2. Rollersitzvorrichtung nach Anspruch 1, **dadurch gekennzeichnet, dass** die zumindest eine erste Befestigungseinheit (14a; 14b; 14c; 14d) zumindest ein Aufnahmeelement (22a; 22b; 22c; 22d) aufweist, das in einem montierten Zustand dazu vorgesehen ist, das Trittbrett (20a; 20b; 20c; 20d) des Rollers (16a; 16b; 16c; 16d) zumindest teilweise zu umgreifen.

3. Rollersitzvorrichtung nach Anspruch 1 oder 2, **dadurch gekennzeichnet, dass** die zumindest eine zweite Befestigungseinheit (24a; 24b; 24c; 24d) zumindest ein Aufnahmeelement (28a; 28b; 28c; 28d) aufweist, das in einem montierten Zustand dazu vorgesehen ist, die Lenkstange (26a; 26b; 26c; 26d) des Rollers (16a; 16b; 16c; 16d) zumindest teilweise zu umgreifen.

4. Rollersitzvorrichtung nach einem der vorherigen Ansprüche, **dadurch gekennzeichnet, dass** die zumindest eine zweite Befestigungseinheit (24d) zumindest ein Aufnahmeelement (28d) aufweist, das in einem montierten Zustand dazu vorgesehen ist, die Lenkstange (26d) des Rollers (16d) vollständig zu umgreifen.

5. Rollersitzvorrichtung nach Anspruch 4, **dadurch gekennzeichnet, dass** das Aufnahmeelement (28d) der zumindest einen zweiten Befestigungseinheit (24d) eine Durchgangsöffnung (94d) aufweist, die in zumindest einer Ebene eine geschlossene, unterbrechungsfreie Außenkontur aufweist.

6. Rollersitzvorrichtung zumindest nach Anspruch 2, **dadurch gekennzeichnet, dass** die zumindest eine erste Befestigungseinheit (14a; 14b; 14d) zumindest ein Befestigungsmittel (30a; 30b; 30d) aufweist, das in einem montierten Zustand dazu vorgesehen ist, das Trittbrett (20a; 20b; 20d) des Rollers (16a; 16b; 16d) in einem Aufnahmebereich (32a; 32b; 32d) des zumindest einen Aufnahmeelements (22a; 22b; 22d) lösbar zu fixieren.

7. Rollersitzvorrichtung nach Anspruch 6, **dadurch gekennzeichnet, dass** das zumindest eine Befestigungsmittel (30a; 30b; 30d) zumindest teilweise von einem Klettverschluss und/oder einem Gummiband gebildet ist.

8. Rollersitzvorrichtung zumindest nach Anspruch 3, **dadurch gekennzeichnet, dass** die zumindest eine zweite Befestigungseinheit (24c) zumindest ein Befestigungsmittel (34c, 34c') aufweist, das in einem montierten Zustand dazu vorgesehen ist, die Lenkstange (26c) des Rollers (16c) in einem Aufnahmebereich (36c) des zumindest einen Aufnahmeelements (28c) lösbar zu fixieren.

9. Rollersitzvorrichtung nach Anspruch 8, **dadurch gekennzeichnet, dass** das zumindest eine Befestigungsmittel (34c, 34c') zumindest teilweise von einem Klettverschluss gebildet ist.

10. Rollersitzvorrichtung nach einem der vorhergehenden Ansprüche, **dadurch gekennzeichnet, dass** der Sitzgrundkörper (12a; 12b; 12c; 12d) zumindest teilweise einstückig mit der zumindest einen ersten Befestigungseinheit (14a; 14b; 14c; 14d) ausgebildet ist.

11. Rollersitzvorrichtung zumindest nach Anspruch 1 oder 2, **dadurch gekennzeichnet, dass** der Sitzgrundkörper (12a; 12b; 12c; 12d) zumindest teilweise einstückig mit der zumindest einen zweiten Befestigungseinheit (24a; 24b; 24c; 24d) ausgebildet ist.

12. Rollersitzvorrichtung zumindest nach Anspruch 1 oder 2, **dadurch gekennzeichnet, dass** die zumindest eine erste Befestigungseinheit (14a; 14b; 14c; 14d) und die zumindest eine zweite Befestigungseinheit (24a; 24b; 24c; 24d) werkzeuglos mit dem Roller (16a; 16b; 16c; 16d) verbindbar und/oder werkzeuglos von dem Roller (16a; 16b; 16c; 16d) trennbar ist.

13. System mit einem Roller (16a; 16b; 16c; 16d), insbesondere mit einem Tretroller, und mit einer Rollersitzvorrichtung (10a; 10b; 10c; 10d) nach einem der vorhergehenden Ansprüche.

## Claims

1. Seat device for a scooter, in particular for a kick scooter, with a seat base body (12a; 12b; 12c; 12d), with at least one first fastening unit (14a; 14b; 14c; 14d) for fastening to a scooter (16a; 16b; 16c; 16d), wherein the at least one first fastening unit (14a; 14b; 14c; 14d) comprises at least one support surface (18a; 18b; 18c; 18d), which is in a mounted state configured to support the seat base body (12a; 12b; 12c; 12d) at least against a footboard (20a; 20b; 20c; 20d) of the scooter (16a; 16b; 16c; 16d), and with at least one second fastening unit (24a; 24b; 24c; 24d), which is releasably connectable to a steering rod (26a; 26b; 26c; 26d) of the scooter (16a; 16b; 16c; 16d), wherein the seat base body (12a; 12b; 12c; 12d) is at least partially embodied by a gas-filled hollow body,
**characterised in that**
the at least one second fastening unit (24a; 24b; 24d) is at least partially embodied by a gas-filled hollow body, and the gas-filled hollow bodies comprise a rigid and/or elastic external shell which completely delimits an inner space enclosed therein.

2. Seat device for a scooter according to claim 1, **characterised in that** the at least one first fastening unit (14a; 14b; 14c; 14d) comprises at least one receiving element (22a, 22b; 22c; 22d), which is in a mounted state configured to at least partially engage around the footboard (20a; 20b; 20c; 20d) of the scooter (16a; 16b; 16c; 16d).

3. Seat device for a scooter according to claim 1 or 2, **characterised in that** the at least one second fastening unit (24a; 24b; 24c; 24d) comprises at least one receiving element (28a; 28b, 28c; 28d), which is in a mounted state configured to at least partially engage around the steering rod (26a; 26b; 26c; 26d) of the scooter (16a; 16b; 16c; 16d).

4. Seat device for a scooter according to one of the preceding claims, **characterised in that** the at least one second fastening unit (24d) comprises at least one receiving element (28d), which is in a mounted state configured to completely engage around the steering rod (26d) of the scooter (16d).

5. Seat device for a scooter according to claim 4, **characterised in that** the receiving element (28d) of the at least one second fastening unit (24d) comprises a pass-through opening (94d) having in at least one plane a contiguous, uninterrupted outer contour.

6. Seat device for a scooter at least according to claim 2, **characterised in that** the at least one first fastening unit (14a; 14b, 14d) comprises at least one fastening means (30a; 30b; 30d), which is in a mounted state configured to releasably fixate the footboard (20a; 20b; 20d) of the scooter (16a; 16b; 16d) in a receiving region (32a; 32b; 32d) of the at least one receiving element (22a; 22b; 22d).

7. Seat device for a scooter according to claim 6, **characterised in that** the at least one fastening means (30a; 30b; 30d) is implemented at least partly by a hook-and-loop fastener and/or an elastic band.

8. Seat device for a scooter at least according to claim 3, **characterised in that** the at least one second fastening unit (24c) comprises at least one fastening means (34c, 34c'), which is in a mounted state configured to releasably fixate the steering rod (26c) of the scooter (16c) in a receiving region (36c) of the at least one receiving element (28c).

9. Seat device for a scooter at least according to claim 3, **characterised in that** the at least one fastening means (34c, 34c') is implemented at least partly by a hook- and-loop fastener.

10. Seat device for a scooter at least according to one of the preceding claims, **characterised in that** the seat base body (12a; 12b; 12c; 12d) is at least partly embodied integrally with the at least one first fastening unit (14a; 14b; 14c; 14d).

11. Seat device for a scooter at least according to claim 1 or 2, **characterised in that** the seat base body (12a; 12b; 12c; 12d) is at least partly embodied integrally with the at least one second fastening unit (24a; 24b; 24c; 24d).

12. Seat device for a scooter at least according to claim 1 or 2, **characterised in that** the at least one first fastening unit (14a; 14b; 14c; 14d) and the at least one second fastening unit (24a; 24b; 24c; 24d) are connectable to the scooter (16a; 16b; 16c; 16d) without a tool and/or are separable from the scooter (16a; 16b; 16c; 16d) without a tool.

13. System with a scooter (16a; 16b; 16c; 16c), in particular a kick scooter, and with a seat device for a scooter (10a; 10b; 10c; 10d) according to one of the preceding claims.

## Revendications

1. Dispositif de siège pour un scooter, notamment dispositif de siège pour une trottinette, avec un corps de siège basique (12a ; 12b ; 12c ; 12d), avec au moins une première unité à fixation (14a ; 14b ; 14c ; 14d) pour une fixation à un scooter (16a ; 16b ; 16c ; 16d), l'au moins une première unité à fixation (14a ; 14b ; 14c ; 14d) comprenant au moins une surface de support (18a ; 18b ; 18c ; 18d) prévue, en état monté, pour appuyer le corps de siège basique (12a ; 12b ; 12c ; 12d) au moins contre un marchepied (20a ; 20b ; 20c ; 20d) du scooter (16a ; 16b ; 16c ; 16d), et avec au moins une deuxième unité à fixation (24a ; 24b ; 24c ; 24d), laquelle est raccordable de façon relâchable avec un guidon (26a ; 26b ; 26c ; 26d) du scooter (16a ; 16b ; 16c ; 16d), le corps de siège basique (12a ; 12b ; 12c ; 12d) étant implémenté au moins partiellement d'un corps creux rempli de gaz, **caractérisé en ce que**
l'au moins une deuxième unité à fixation (24a ; 24b ; 24d) est réalisée au moins partiellement comme corps creux rempli de gaz, les corps creux remplis de gaz comportant un fourreau protecteur élastique complètement délimitant un espace intérieur inclus là-dedans.

2. Dispositif de siège pour un scooter selon la revendication 1, **caractérisé en ce que** l'au moins une première unité à fixation (14a ; 14b ; 14c ; 14d) comporte au moins un élément d'accommodation (22a ; 22b ; 22c ; 22d), lequel est prévu, en état monté, pour au moins partiellement engager autour du marchepied (20a ; 20b ; 20c ; 20d) du scooter (16a ; 16b ; 16c ; 16d).

3. Dispositif de siège pour un scooter selon la revendication 1 ou 2, **caractérisé en ce que** l'au moins une deuxième unité à fixation (24a ; 24b ; 24c ; 24d) comporte au moins un élément d'accommodation (28a ; 28b, 28c ; 28d) prévu, en état monté, pour au moins partiellement engager autour du guidon (26a ; 26b ; 26c ; 26d) du scooter (16a ; 16b ; 16c ; 16d).

4. Dispositif de siège pour un scooter selon l'une quelconque des revendications précédentes, **caractérisé en ce que** l'au moins une deuxième unité à fixation (24d) comporte au moins un élément d'accommodation (28d) prévu, en état monté, pour complètement engager autour du guidon (26d) du scooter (16d).

5. Dispositif de siège pour un scooter selon la revendication 4, **caractérisé en ce que** l'élément d'accommodation (28d) de l'au moins une deuxième unité à fixation (24d) comporte une ouverture de passage (94d) comprenant dans au moins un plan un contour extérieur continu, sans interruption.

6. Dispositif de siège pour un scooter au moins selon la revendication 2, **caractérisé en ce que** l'au moins une première unité à fixation (14a ; 14b ; 14d) comporte au moins un moyen de fixation (30a ; 30b ; 30d) prévu, en état monté, pour relâchablement fixer le marchepied (20a ; 20b ; 20d) du scooter (16a ; 16b ; 16d) dans une zone d'accommodation (32a ; 32b ; 32d) de l'au moins un élément d'accommodation (22a ; 22b ; 22d).

7. Dispositif de siège pour un scooter selon la revendication 6, **caractérisé en ce que** l'au moins un moyen de fixation (30a ; 30b ; 30d) est implémenté au moins partiellement d'une fermeture par crochets et boucles et/ou d'une bande élastique.

8. Dispositif de siège pour un scooter au moins selon la revendication 3, **caractérisé en ce que** l'au moins une deuxième unité à fixation (24c) comporte au moins un moyen de fixation (34c, 34c') prévu, en état monté, pour relâchablement fixer le guidon (26c) du scooter (16c) dans une zone d'accommodation (36c) de l'au moins un élément d'accommodation (28c).

9. Dispositif de siège pour un scooter selon la revendication 8, **caractérisé en ce que** l'au moins un moyen de fixation (34c, 34c') est implémenté au moins partiellement d'une fermeture par crochets et boucles.

10. Dispositif de siège pour un scooter selon l'une quelconque des revendications précédentes, **caractérisé en ce que** le corps de siège basique (12a ; 12b ; 12c ; 12d) est implémenté au moins partiellement intégralement avec l'au moins une première unité à fixation (14a ; 14b ; 14c ; 14d).

11. Dispositif de siège pour un scooter au moins selon l'une des revendications 1 ou 2, **caractérisé en ce que** le corps de siège basique (12a ; 12b ; 12c ; 12d) est implémenté au moins partiellement intégralement avec l'au moins une deuxième unité à fixation (24a ; 24b ; 24c ; 24d).

12. Dispositif de siège pour un scooter au moins selon l'une des revendications 1 ou 2, **caractérisé en ce que** l'au moins une première unité à fixation (14a ; 14b ; 14c ; 14d) et l'au moins une deuxième unité à fixation (24a ; 24b ; 24c ; 24d) sont raccordables avec le scooter (16a ; 16b ; 16c ; 16d) sans outil et/ou sont séparables du scooter (16a ; 16b ; 16c ; 16d) sans outil.

13. Système avec un scooter (16a ; 16b ; 16c ; 16d), notamment trottinette, et avec un dispositif de siège pour un scooter (10a ; 10b ; 10c ; 10d) selon l'une quelconque des revendications précédentes.
